# EUROPÄISCHE PATENTSCHRIFT

(11) **EP 0 603 212 B1**
(45) Veröffentlichungstag und Bekanntmachung des Hinweises auf die Patenterteilung: **08.11.1995**
(21) Anmeldenummer: 92917821.8
(22) Anmeldetag: 17.08.1992
(51) Int. Cl.: H02K 3/40, H02K 3/48

(54) **IMPRÄGNIERBARE ANORDNUNG AUS EINEM TRÄGERKÖRPER UND WICKLUNGSELEMENTEN**
IMPREGNATABLE ARRANGEMENT OF A BEARER AND WINDING COMPONENTS
DISPOSITIF IMPREGNABLE CONSTITUE D'UN SUPPORT ET D'ELEMENTS D'ENROULEMENT

(30) Priorität: 13.09.1991 EP 91115568
(43) Veröffentlichungstag der Anmeldung: 29.06.1994
(73) Patentinhaber: SIEMENS AKTIENGESELLSCHAFT, 80333 München (DE)
(72) Erfinder: VON MUSIL, Rudolf, D-4200 Oberhausen (DE); SCHIER, Wolfang, D-4330 Mülheim (DE); KREMSER, Günter, D-4330 Mülheim (DE); DIDZUN, Norbert, D-4330 Mülheim (DE); MÜLLER, Rainer, D-4030 Ratingen (DE); STOBBE, Ferdinand, D-4330 Mülheim (DE)
(86) Internationale Anmeldenummer: EP9201874
(87) Internationale Veröffentlichungsnummer: WO9306646

(56) Entgegenhaltungen:
- WO-A-91/01059
- CH-A- 402 144
- PATENT ABSTRACTS OF JAPAN vol. 4, no. 165 (E-34)(647) 15. November 1980 & JP-A-55114158
- PATENT ABSTRACTS OF JAPAN vol. 7, no. 45 (E-160)(1190) 23. Februar 1983 & JP-A-57196844
- PATENT ABSTRACTS OF JAPAN vol. 8, no. 239 (E-276)(1676) 2. November 1984 & JP-A-59117435

## Beschreibung

Die Erfindung bezieht sich auf eine Anordnung aus einem ferromagnetischen und elektrisch leitfähigen Trägerkörper und Wicklungselementen, beispielsweise zur Verwendung in einer elektrischen Großmaschine mit elektrischer Leistungsaufnahme oder -abgabe von mehr als etwa 20 MVA, vorzugsweise mehr als etwa 50 MVA, insbesondere bezieht sich die Erfindung auf eine solche Anordnung zur Verwendung als Stator in einem Turbogenerator.

Ein in einer solchen Anordnung vorhandenes Wicklungselement hat üblicherweise einen Grundkörper mit zumindest einem elektrisch gut leitfähigen Metalldraht oder Metallstab, insbesondere mit einer Vielzahl derartiger Metallstäbe, und ist von einer Isolierhülse umgeben, die von einer elektrisch halbleitfähigen Schutzschicht umhüllt ist. Die Isolierhülse eines Wicklungselementes besteht üblicherweise aus einem mit einem Füllstoff zu imprägnierenden oder imprägnierten, Glimmer enthaltenden Material; dieses ist üblicherweise ein auf den Grundkörper aufgewickeltes Band auf der Basis von Feinglimmer, und der Füllstoff ist ein Kunstharz, vorzugsweise ein heißhärtendes Epoxidharz-System, z. B. ein heißhärtendes Gemisch aus einem Epoxidharz und einem Säure-Anhydrid. Ein in einem Wicklungselement vorhandener Metalldraht oder Metallstab kann zur Führung eines fließfähigen Kühlmittels hohl sein. Wicklungselemente sind bekannt als Wicklungsstäbe mit stabförmigen Grundkörpern, insbesondere etwa geraden Grundkörpern mit abgebogenen Enden, sowie als Formspulen mit Grundkörpern aus aufgewickelten Drähten; Formspulen haben in der Regel zwei etwa gerade, jeweils in besondere Nuten einzulegende Segmente. Wicklungsstäbe finden üblicherweise Anwendung in dynamoelektrischen Maschinen sehr hoher Leistung, z. B. in Turbogeneratoren, Formspulen werden bevorzugt in dynamoelektrischen Maschinen kleiner Leistung eingesetzt.

Die am weitesten verbreitete Methode zur Herstellung einer Komponente mit Wicklungselementen für eine dynamoelektrische Großmaschine erfordert die Bereitstellung von Wicklungselementen, die vor ihrer Einfügung in die Komponente bereits mit der Imprägnierung ihrer Isolierhülsen versehen sind und durch Aushärtung der Imprägnierung in speziellen Preßformen die erforderliche äußere Gestalt erhalten haben. Inzwischen hat auch das sogenannte Ganztränkverfahren Anwendung gefunden, bei dem die Wicklungselemente ihre Füllstoff-Imprägnierungen erst nach Einbau in den entsprechenden Trägerkörper erhalten; durch Einführung des Ganztränkverfahrens konnte die bis dahin erforderliche präzise Formgebung durch Pressen o. dgl. weitgehend überflüssig gemacht werden. Auch werden beim Ganztränkverfahren die die Wicklungselemente enthaltenden Nuten in einem Trägerkörper im wesentlichen vollständig mit dem Füllstoff ausgefüllt, so daß die Wicklungselemente ohne weitere Verkeilungsmaßnahmen, wie sie bis dahin stets erforderlich waren, weitestgehend unverrückbar in den Nuten des Trägerkörpers fixiert sind.

Bei der Konstruktion einer zu imprägnierenden Anordnung aus einem Trägerkörper und Wicklungselementen muß berücksichtigt werden, daß die Anordnung sowohl bei der Imprägnierung mit Füllstoff und der darauf folgenden Aushärtung des Füllstoffes als auch beim späteren Betrieb in einer elektrischen Maschine wechselnden Temperaturen aus einem Bereich zwischen üblichen Umgebungstemperaturen und mehr als 100° C ausgesetzt ist; aufgrund der voneinander abweichenden thermischen Ausdehnungskoeffizienten von Trägerkörper (der üblicherweise aus einem ferromagnetischen Metall besteht) und Füllstoff (in der Regel Epoxidharz) müssen die Möglichkeiten des Auftretens thermischer Spannungen und der Bildung von Rissen in dem Füllstoff erwogen und berücksichtigt werden. Hierzu ist bereits bekannt, zwischen jedes Wicklungselement und zumindest eine Nutwand der Nut, in die es eingelegt ist, eine Trennschicht einzufügen, deren Festigkeit gegenüber der Festigkeit anderer Schichten in der Nut deutlich reduziert ist, so daß die Bildung von Rissen vorzugsweise in dieser Trennschicht stattfindet; zur Vermeidung von Glimmentladungen in solchen Rissen (eine Gefahr, die insbesondere in den Statoren elektrischer Großmaschinen besteht) wird die Trennschicht elektrisch abgeschirmt, indem sie zwischen zwei miteinander verbundene elektrisch zumindest schwachleitfähige Schichten eingefügt wird. Die unmittelbar an das Wicklungselement anschließende elektrisch schwachleitfähige Schicht kann dabei die dem Wicklungselement üblicherweise ohnehin als "Außenglimmschutz" zugeordnete Schutzschicht sein. Die Funktionen der der Schutzschicht hinter der Trennschicht gegenüberliegenden anderen elektrisch zumindest schwachleitfähigen Schicht kann unter Umständen die Nutwand selbst übernehmen; es kann jedoch auch eine zusätzliche elektrisch leitfähige oder schwachleitfähige Zwischenschicht eingefügt werden.

Weitere Ausführungen zur Anwendung des Ganztränkverfahrens bei der Herstellung von Komponenten für dynamoelektrische Großmaschinen sind der WO 91/01059 A1 und der EP 0 379 012 A2 entnehmbar; beide Dokumente betreffen die. Herstellung von Anordnungen aus ferromagnetischen und elektrisch leitfähigen Trägerkörpern und Wicklungsstäben, die dem Ganztränkverfahren in der oben beschriebenen Weise zu unterziehen sind. Die zweitgenannte Schrift gibt darüber hinaus Hinweise, wie die Halterung der Wicklungsstäbe in einem Trägerkörper unter Ausnutzung der sich aus dem Ganztränkverfahren ergebenden Vorteile ausgestaltet werden kann.

Weitere Hinweise zum Ganztränkverfahren bei der Herstellung von Komponenten für dynamoelektrische Maschinen sind der DE 36 36 008 A1 sowie dem US-Patent 3,990,029 entnehmbar. Beide Dokumente betreffen allerdings Anordnungen mit Wicklungsstäben, deren Isolierhülsen beim Einbau in den Trägerkörper bereits fertig imprägniert sind.

Hinweise zur Herstellung der Wicklungselemente und Wicklungen elektrischer Maschinen sowie Hinweise zu Isolierungen in elektrisch und thermisch hoch belasteten Maschinen, sind dem von H. Sequenz herausgegebenen Buch "Herstellung der Wicklungen elektrischer Maschinen", Springer-Verlag, Wien und New York 1973, entnehmbar. Eine ausführliche Behandlung des für Isolierungen in elektrischen Maschinen sehr wichtigen Werkstoffs Glimmer findet sich in dem Buch "Glimmer und Glimmererzeugnisse" von H.-W. Rotter, Siemens Aktiengesellschaft, Berlin und München 1985. Insbesondere in diesem Werk sind Ausführungen zur Verwendung von Spaltglimmer, worunter dünne, durch Aufspaltung großer Glimmerkristalle erhaltene Blätter zu verstehen sind, und Feinglimmer, worunter ein papierähnliches Erzeugnis aus feingemahlenem Glimmer zu verstehen ist, enthalten. Spaltglimmer und Feinglimmer werden vorzugsweise als Glimmerbänder, bestehend aus dem jeweiligen Glimmererzeugnis auf einem Träger wie Japanpapier, Glastextil oder Kunstfasertextil, verwendet. Gemäß der zweitgenannten Referenz ist Feinglimmer das zur Herstellung von Isolierungen in thermisch und elektrisch hoch belasteten Maschinen zu bevorzugende Produkt, da eine Isolierung aus Spaltglimmer aufgrund der Federwirkung und der Neigung zur weiteren Aufspaltung der Spaltglimmerblätter wesentlich mehr als Feinglimmer zur Bildung von Hohlräumen neigt und damit womöglich Glimmentladungen in Isolierungen verursachen könnte.

Eine im Ganztränkverfahren mit einem Füllstoff zu imprägnierende Anordnung aus einem ferromagnetischen und elektrisch leitfähigen Trägerkörper und Wicklungsstäben, bei der in bereits erörterter Weise zwischen jedem Wicklungsstab und mindestens einer Nutwand der zugehörigen Nut eine Trennschicht angeordnet ist, welche zur Verhinderung von Glimmentladungen elektrisch abgeschirmt ist, ist dargestellt in der WO 91/01059 A1. Die Trennschicht wird gebildet unter Zuhilfenahme von Substanzen, die von dem Füllstoff nicht benetzbar sind; solche Substanzen können Beschichtungen oder Imprägnierungen von Textilien oder Folien, die gegebenenfalls durch Lochungen oder dergleichen für den Füllstoff durchlässig sind, sein. Um die Abschirmung der Trennschicht zu gewährleisten, liegt diese zwischen zwei elektrisch schwachleitfähigen Lagen; diese Lagen können sich entweder durch die Trennschicht hindurch berühren und somit elektrische Kontakte bilden, oder es kann ein metallischer, mit beiden schwachleitfähigen Schichten in Kontakt stehender, Kontaktleiter verwendet werden.

Die Erfindung beruht auf der Aufgabe, eine Anordnung aus einem ferromagnetischen und elektrisch leitfähigen Trägerkörper und Wicklungselementen, die in zugehörige Nuten des Trägerkörpers eingelegt sind, anzugeben, welche Anordnung im Wege des Ganztränkverfahrens mit einem Füllstoff zu imprägnieren ist (wobei auch die Isolierhülsen der Wicklungselemente ihre Imprägnierung erhalten) und bei der zwischen jedes Wicklungselement und mindestens einer Nutwand jeder zugehörigen Nut eine für den Füllstoff durchlässige Trennschicht vorgesehen ist sowie die Schutzschicht jedes Wicklungselementes und die Nutwand durch die Trennschicht hindurch miteinander elektrisch verbunden sind, wobei keine die Imprägnierung erschwerenden Trennmittel verwendet werden müssen und wobei keine besonderen metallischen Kontaktleiter, die aufgrund der in ihnen womöglich auftretenden Wirbelstromverluste zu lokalen Erwärmungen führen können, erforderlich sind.

Die erfindungsgemäße Lösung dieser Aufgabe ist eine Anordnung aus einem ferromagnetischen und elektrisch leitfähigen Trägerkörper und Wicklungselementen, welche in zugehörige Nuten des Trägerkörpers eingelegt sind, bei welcher Anordnung
a) jedes Wicklungselement einen elektrisch gut leitfähigen Grundkörper aufweist, der von einer imprägnierbaren Isolierhülse umgeben ist, die von einer elektrisch schwachleitfähigen, imprägnierbaren Schutzschicht umhüllt ist;
b) zwischen jedem Wicklungselement und mindestens einer Nutwand jeder zugehörigen Nut eine Imprägnierbare Trennschicht angeordnet ist;
c) die Schutzschicht mit der Nutwand durch die Trennschicht hindurch über eine Vielzahl von Brücken elektrisch verbunden ist;
   und bei welcher Anordnung
d) die Trennschicht im wesentlichen aus Spaltglimmerblättern besteht, die flach zwischen dem Wicklungsstab und der Nutwand liegen;
e) die Brücken elektrisch schwachleitfähig sind.

Die Erfindung ermöglicht insbesondere, die Spaltbarkeit des Spaltglimmers vorteilhaft auszunutzen. Glimmerkristalle, und damit auch die aus Glimmerkristallen erhaltenen Spaltglimmerblätter, neigen aufgrund der Kristallstruktur zur weiteren Zerlegung in einer besonderen Spaltebene, wobei Spaltglimmerblätter sich in mehrere aufeinanderliegende Blätter mit entsprechend reduzierter Dicke aufspalten. Diese Eigenschaft wird ausgenutzt, um in jeder Nut der erfindungsgemäßen Anordnung Zonen zu schaffen, in denen die durch Schrumpfungsprozess bedingte Spaltbildung konzentriert wird. Die Imprägnierbarkeit der Anordnung wird durch die Verwendung von Spaltglimmer nicht beeinträchtigt; bei der Ganztränkung kann der Füllstoff zwischen den Spaltglimmerblättern hindurchfließen oder Spalte zwischen schuppig aufeinanderliegenden Spaltglimmerblättern durchqueren.

Darüber hinaus vermeidet die Erfindung weitestgehend Wirbelströme, die durch zeitlich veränderliche Magnetfelder in der Nut erzeugt werden können, da anstelle eines elektrisch gut leitenden Kontaktleiters ein Schwachleiter zur Bildung der elektrischen Kontakte durch die Trennschicht hindurch verwendet wird. Dementsprechend eignet sich die erfindungsgemäße Anordnung insbesondere zur Herstellung eines Stators für einen elektrisch hoch ausgenutzten Generator, bei dem die in den Nuten des Trägerkörpers auftretenden magnetischen Wechselfelder relativ hoch sind und deshalb die Verwendung eines elektrisch gut leitfähigen Kontaktleiters aufgrund der darin entstehenden hohen Wirbelströme nachteilig ist.

Günstigerweise sind die Spaltglimmerblätter in der erfindungsgemäßen Anordnung auf oder in einem imprägnierbaren Träger gehaltert; vorteilhafterweise kommt eine Spaltglimmerfolie oder ein Spaltglimmerband mit Spaltglimmerblättern auf imprägnierbarem Papier oder einer imprägnierbaren Textilie, gegebenenfalls auch ein Produkt aus Spaltglimmer, der zwischen zwei derartigen Trägern eingeschlossen ist, in Frage. In jedem solchen Fall ist es besonders vorteilhaft, als Träger eine elektrisch schwachleitfähige Textilie zu verwenden. Solche Textilien stehen in vielerlei Formen zur Verfügung; sie können aus Fasern gebildet werden, die aus elektrisch schwachleitfähigen Kunststoffen bestehen, durch Beimischung elektrisch leitfähiger Pigmente (beispielsweise Ruß) leitfähig sind oder elektrisch schwachleitfähige Beschichtungen aufweisen.

Der Begriff "elektrisch schwachleitfähig" ist erfindungsgemäß folgendermaßen zu verstehen: Ein flächig ausgedehnter, dünner, elektrischen Strom leitender Gegenstand (eine Folie oder ein Stück einer Textilie) ist hinsichtlich seines elektrischen Widerstandes, den er für elektrischen Strom, der den Gegenstand in der Fläche durchfließt, durch einen sogenannten "spezifischen Oberflächenwiderstand" charakterisierbar; dieser spezifische Oberflächenwiderstand entspricht dem Quotienten aus dem spezifischen Widerstand der Substanz, aus der der Gegenstand besteht, und seiner Dicke, und ist damit gleich dem elektrischen Widerstand eines Quadrates, das senkrecht bzw. parallel zu seinen Seiten von elektrischem Strom durchflossen wird. Der elektrische Widerstand eines anders gestalteten Flächenstückes entspricht dem mit einem Faktor multipizierten spezifischen Oberflächenwiderstand, wobei der Faktor nur von der Form des Gegenstandes abhängt und insbesondere unabhängig von der Ausdehnung des Gegenstandes ist. Als "schwachleitfähig" im Sinne der Erfindung sollen Textilien und dergleichen dann angesehen werden, wenn ihre spezifischen Oberflächenwiderstände Werte haben, die den spezifischen Oberflächenwiderständen typischer und an sich bekannter Glimmschutzanordnungen in dynamoelektrischen Maschinen etwa entsprechen. Insbesondere sind leitfähige Textilien geeignet, deren spezifische Oberflächenwiderstände zwischen 2 kOhm und 100 kOhm, vorzugsweise zwischen 5 kOhm und 30 kOhm, betragen. Die Angaben zur Charakterisierung der "Schwachleitfähigkeit" beziehen sich auf Textilien nach erfolgter Harzimprägnierung; üblicherweise erhöht eine Harzimprägnierung den spezifischen Oberflächenwiderstamd einer Textilie erheblich, indem das Harz Isolierungen zwischen Fasern bildet, die vor der Imprägnierung in Kontakt miteinander waren. In der Praxis hat sich gezeigt, daß eine Harzimprägnierung den spezifischen Oberflächenwiderstand einer leitfähigen oder schwachleitfähigen Textilie auf das Zehnfache erhöhen kann.

Im Rahmen jedweder Ausbildung der erfindungsgemäßen Anordnung können die Brücken zur Verbindung der Schutzschicht und der Nutwand ebenfalls aus einer elektrisch schwachleitfähigen Textilie gebildet sein; es können beispielsweise Stücke eines elektrisch schwachleitfähigen Bandes durch die Trennschicht hindurchgefädelt werden, so daß sie sowohl mit der Schutzschicht eines Wicklungselementes als auch mit der Nutwand in elektrischen Kontakt treten; besonders günstig ist es, ein einziges elektrisch schwachleitfähiges textiles Band entlang des Wicklungselementes durch eine Vielzahl von Schlitzen der Trennschicht so hindurchzufädeln, daß es abschnittsweise abwechselnd auf beiden Seiten der Trennschicht liegt. Die erfindungsgemäßen Brücken sind damit die Abschnitte des Bandes, die durch die Trennschicht hindurchtreten.

Eine andere vorteilhafte Weiterbildung der erfindungsgemäßen Anordnung jedweder Ausgestaltung ist das Einfügen einer aus einer elektrisch schwachleitfähigen Textilie bestehenden Zwischenlage zwischen die Trennschicht und die Nutwand. Eine solche Zwischenlage kann eine vollständige Auskleidung der Nut, also eine Überdeckung beider Nutwände und des Nutbodens, sein. Unter Umständen ist es jedoch ausreichend, nur eine Nutwand mit der Zwischenlage zu überdecken. Eine solche Zwischenlage vermag zur Fixierung der Wicklungselemente in den Nuten beizutragen, da durch ihre Einfügung die Trennschicht eine gewisse Unebenheit erhält und so trotz der Bildung von Rissen in der Trennschicht das Entstehen großflächiger und womöglich die gesamte Nut durchquerender Spalte vermieden wird. Auf diese Weise wird in der Trennschicht trotz der Rißbildung eine gewisse Lagefixierung der Wicklungselemente erreicht, was vorteilhaft ist.

Sofern in der erfindungsgemäßen Anordnung unbeschadet weiterer Ausgestaltung eine Zwischenlage vorgesehen ist, kann diese als Träger für die Spaltglimmerblätter der Trennschicht dienen; damit wird die Anzahl der beim Aufbau der Anordnung erforderlichen Komponenten gering gehalten und der Fertigungsaufwand reduziert.

Eine weitere Möglichkeit zur vorteilhaften Weiterbildung der erfindungsgemäßen Anordnung, die ggf. zu anderweitigen Ausgestaltungen hinzutreten kann, ist die Umhüllung jedes Wicklungselementes mit einer eigenen Trennschicht. Auf diese Weise kann die Trennschicht beim Vorbereiten des Wicklungselementes vor dessen Einlegung in die Nut gebildet werden. Dies trägt wesentlich bei zur Vereinfachung des Einlegens bei, da alle in die Nut einzubringenden Komponenten leicht und unbehindert durch enge Platzverhältnisse auf den Wicklungselementen vor dem Einlegen in die Nuten angebracht werden können. Die Trennschicht jedes Wicklungselementes ist vorteilhafterweise ein mit einer Vielzahl von Windungen um das Wicklungselement gewickeltes, den Spaltglimmer enthaltendes Band.

Vorteilhafterweise sind die elektrisch schwachleitfähigen Brücken gebildet mit einem Band aus einer elektrisch schwachleitfähigen Textilie, das entlang des Wicklungselementes befestigt wird, indem das die Trennschicht bildende Band abwechselnd über und unter das Band auf das Wicklungselement aufgewickelt wird.

Vorteilhaft ist es weiterhin, auf ein von einer Trennschicht umhülltes Wicklungselement auch die Zwischenlage in Form einer elektrisch schwachleitfähigen Textilie aufzubringen. Beispielsweise kann das Wicklungselement über der Trennschicht mit einem elektrisch schwachleitfähigen Band umwickelt werden.

Die erfindungsgemäße Anordnung im Rahmen jedweder Ausgestaltung eignet sich besonders als Teil einer dynamoelektrischen Großmaschine, insbesondere als Stator, nachdem sie mit einem Füllstoff, insbesondere einem Epoxidharz bzw. einem Epoxidharz-Säureanhydrid-Gemisch, imprägniert wurde.

Die mit einem ausgehärteten Füllstoff, insbesondere mit einem Epoxidharz, Epoxidharz-Säureanhydrid-Gemisch oder einer anderen Zubereitung auf Epoxidharz-Basis imprägnierte erfindungsgemäße Anordnung jedweder Ausbildung zeichnet sich dadurch aus, daß jede Nut mindestens eine, im wesentlichen parallel zu einer Nutwand liegende, elektrisch abgeschirmte Trennschicht aufweist, deren Festigkeit kleiner ist als diejenige anderer Schichten in der Nut, und in der somit die durch thermisch bedingte Schrumpfprozesse bedingten Risse bevorzugt, jedoch ohne nachteilige Konsequenzen, auftreten.

Die weitere Erläuterung der Erfindung erfolgt anhand der in der Zeichnung dargestellten Ausführungsbeispiele. Die Ausführungsbeispiele sind zur Hervorhebung der für die Erfindung wesentlichen Merkmale gegebenenfalls leicht schematisiert und/oder verzerrt dargestellt. Im einzelnen zeigen:
Figur 1 ein einfaches Ausführungsbeispiel der Erfindung;
Figur 2 ein Ausführungsbeispiel der Erfindung gemäß einer Weiterbildung;
Figur 3 und Figur 4 verschiedene Ansichten eines im Rahmen einer besonders günstigen Ausführungsform der Erfindung verwendbaren Wicklungselementes.

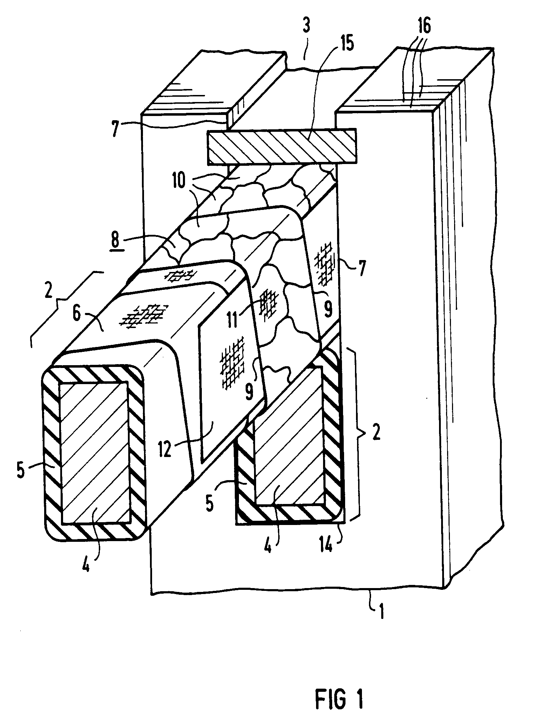

Figur 1 zeigt einen Ausschnitt aus einer Anordnung aus einem ferromagnetischen und elektrisch leitfähigen, aus aufeinandergeschichteten Blechen 16 gebildeten Trägerkörper 1 mit zwei Wicklungselementen 2, die in eine Nut 3 des Trägerkörpers 1 eingelegt sind. Die Nut 3 ist mit einem Nutverschluß 15 verschlossen. Jedes Wicklungselement 2 weist einen elektrisch gut leitfähigen Grundkörper 4 auf, der von einer Isolierhülse 5 umgeben ist, die eine Schutzschicht 6 in Form eines auf die Isolierhülse 5 aufgewickelten Bandes aufweist. Es ist in jedem Wicklungselement 2 ein nicht strukturierter Grundkörper 4 dargestellt; es sei darauf hingewiesen, daß in dynamoelektrischen Großmaschinen üblicherweise jedes Wicklungselement einen Grundkörper mit einer Vielzahl von Metallstäben oder Metalldrähten, davon evtl. zumindest ein Teil hohl zur Führung eines fließfähigen Kühlmittels wie z. B. Luft, Wasserstoff oder Wasser, enthält. Über die Schutzschicht 6 jedes Wicklungselementes 2 ist die Trennschicht 8 gewickelt; diese Trennschicht 8 ist gebildet mit einem Band, das Spaltglimmerblätter 10 auf einem Träger 11 aus Papier oder Fasern enthält. Zur Darstellung des Trägers 11 ist ein Spaltglimmerblatt 10 der Trennschicht 8 weggelassen worden. Zur Bildung elektrisch schwachleitfähiger Brücken 9 zwischen der Schutzschicht 6 und einer Nutwand 7 ist ein elektrisch schwachleitfähiges Band 12 zusammen mit der Trennschicht 8 auf das Wicklungselement 2 aufgewickelt in der Weise, daß das Band 12 abwechselnd über und unter der Trennschicht 8 liegt. Auf diese Weise kommt das Band 12 sowohl mit der Schutzschicht 6 als auch mit der Nutwand 7 in Kontakt; die durch die Trennschicht 8 hindurchtretenden Abschnitte des Bandes 12 bilden die Brücken 9. Da im dargestellten Fall jedes Wicklungselement 2 von einer Trennschicht 8 vollständig umgeben ist, liegen die erfindungsgemäßen Schichten verringerter mechanischer Festigkeit nicht nur zwischen einer einzigen Nutwand 7 und jedem Wicklungselement 2, sondern zwischen jedem Wicklungselement 2 und jeder Nutwand 7, sowie auch zwischen dem unteren Wicklungselement 2 und dem Nutboden 14.

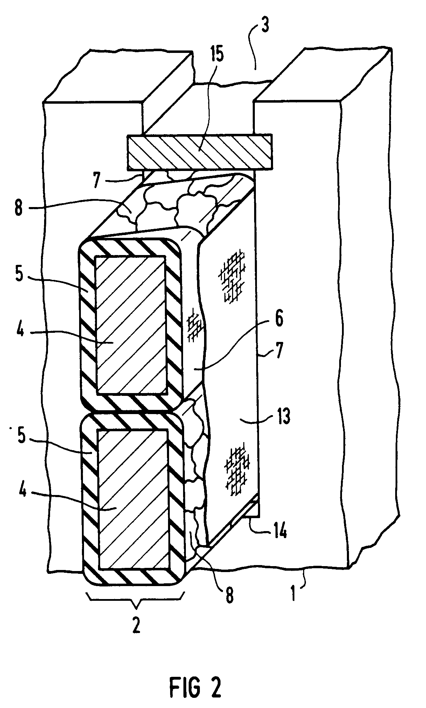

Figur 2 zeigt ein weiteres Ausführungsbeispiel für die erfindungsgemäße Anordnung aus einem Trägerkörper 1 und Wicklungselementen 2, die in eine Nut 3 des Trägerkörpers 1 eingelegt sind. Die Nut 3 ist mit einem Nutverschluß 15 verschlossen. Jedes Wicklungselement 2 weist einen Grundkörper 4, eine Isolierhülse 5 und eine Schutzschicht 6 auf und ist von einer Trennschicht 8 umgeben. Zwischen einer Nutwand 7 und den Wicklungselementen 2 ist eine Zwischenlage 13 aus einer elektrisch leitfähigen, vorzugsweise schwachleitfähigen Textilie eingefügt, welche Zwischenschicht 13 die Eigenschaften der Trennschicht 8 in der bereits abgehandelten Weise weiter verbessert. Dargestellt ist eine Zwischenlage 13, die lediglich eine Nutwand 7 überdeckt; sehr wohl möglich und unter Umständen auch vorteilhaft ist die Verwendung einer U-förmigen Zwischenschicht, die beide Nutwände 7 und zusätzlich noch den Nutboden 14 bedeckt.

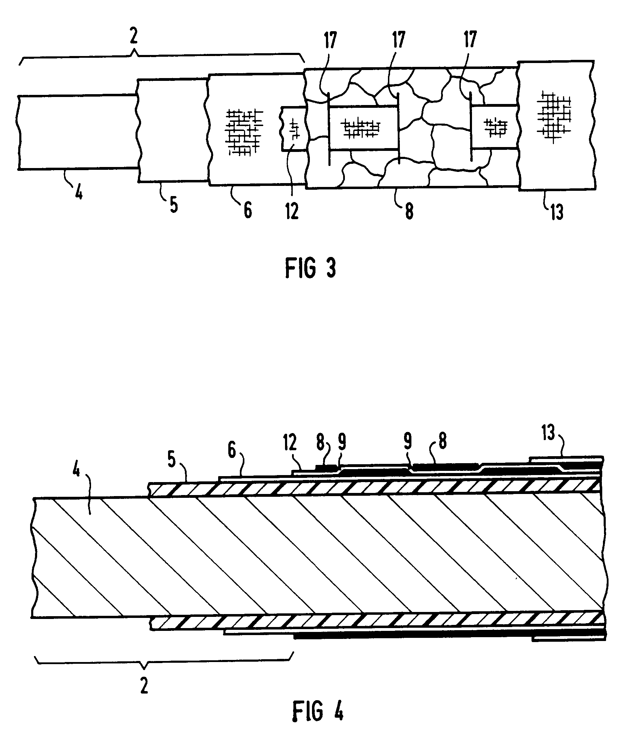

Eine besonders bevorzugte Ausführungsform der erfindungsgemäßen Anordnung ist realisierbar unter Verwendung eines Wicklungselementes 2 mit Zusätzen, wie in Figur 3 in Draufsicht und in Figur 4 in einem Querschnitt senkrecht zur Sichtebene der Figur 3 dargestellt. Das Wicklungselement 2 (ein Wicklungsstab im dargestellten Beispiel) mit Grundkörper 4, Isolierhülse 5 und Schutzschicht 6 ist umhüllt von der Trennschicht 8, welche ihrerseits von der Zwischenlage 13 umgeben ist. Um die Schutzschicht 6 mit der Zwischenlage 13 elektrisch zu verbinden, ist durch Schlitze 17 in der Trennschicht 8 ein elektrisch schwachleitfähiges Band 12 abwechselnd über und unter die Trennschicht 8 geführt, so daß es sowohl mit der Zwischenlage 13 als auch mit der Schutzschicht 6 in Kontakt ist. Die Brücken 9 sind gebildet durch die Abschnitte des Bandes 12, die durch die Schlitze 17 hindurchtreten. Erfindungsgemäß bedarf es lediglich noch des Einlegens der in Figur 3 und Figur 4 dargestellten Anordnung in den Trägerkörper; alle in den Trägerkörper einzubringenden Komponenten sind mit dem Wicklungselement 2 bereits vereinigt. Es versteht sich, daß vorteilhafterweise Isolierhülse 5, Schutzschicht 6, Trennschicht 8 und auch Zwischenlage 13 durch aufeinanderfolgende Bewicklungen des Grundkörpers 4 mit Bändern, die gegebenenfalls schwachleitfähig und/oder glimmerhaltig sind, hergestellt werden; solche Möglichkeiten gehen bereits aus Figur 1 und Figur 2 hervor und sind selbstverständlich auf die Anordnungen gemäß Figur 3 und Figur 4 übertragbar.

Die erfindungsgemäße Anordnung aus einem ferromagnetischen und elektrisch leitfähigen Trägerkörper und Wicklungselementen jedweder Ausbildung ist den Anforderungen des Ganztränkverfahrens zur Herstellung einer Komponente für eine elektrische Großmaschine, insbesondere einen Stator, sowohl im Hinblick auf die erforderlichen Herstellungsaufwendungen als auch im Hinblick auf betriebliche Belastungen, in besonderer Weise angepaßt.

## Patentansprüche

1. Anordnung aus einem ferromagnetischen und elektrisch leitfähigen Trägerkörper (1) und Wicklungselementen (2), welche in zugehörige Nuten (3) des Trägerkörpers (1) eingelegt sind, bei welcher Anordnung
a) jedes Wicklungselement (2) einen elektrisch gut leitfähigen Grundkörper (4) aufweist, der von einer imprägnierbaren Isolierhülse (5) umgeben ist, die von einer elektrisch schwachleitfähigen, imprägnierbaren Schutzschicht (6) umhüllt ist;
b) zwischen jedem Wicklungselement (2) und mindestens einer Nutwand (7) jeder zugehörigen Nut (3) eine imprägnierbare Trennschicht (8) angeordnet ist;
c) die Schutzschicht (6) mit der Nutwand (7) durch die Trennschicht (8) hindurch über eine Vielzahl von Brücken (9) elektrisch verbunden ist;
**dadurch gekennzeichnet,** daß
d) die Trennschicht (8) im wesentlichen aus Spaltglimmerblättern (10) besteht, die flach zwischen dem Wicklungsstab (2) und der Nutwand (7) liegen;
e) die Brücken (9) elektrisch schwachleitfähig sind.

2. Anordnung nach Anspruch 1, bei der die Spaltglimmerblätter (10) auf oder in einem imprägnierbaren Träger (11) gehaltert sind.

3. Anordnung nach Anspruch 2, bei der der Träger (11) eine elektrisch schwachleitfähige Textilie ist.

4. Anordnung nach einem der vorhergehenden Ansprüche, bei der die Brücken (9) aus einer elektrisch schwachleitfähigen Textilie bestehen.

5. Anordnung nach Anspruch 4, bei der die Brücken (9) gebildet sind mit zumindest einem Band (12) aus einer elektrisch schwachleitfähigen Textilie, welches Band (12) vielfach durch die Trennschicht (8) hindurchgeführt und sowohl mit der Schutzschicht (6) als auch mit der Nutwand (7) elektrisch verbunden ist.

6. Anordnung nach einem der vorhergehenden Ansprüche, bei der zwischen der Trennschicht (8) und der Nutwand (7) eine Zwischenlage (13) aus einer elektrisch schwachleitfähigen Textilie liegt.

7. Anordnung nach Anspruch 6, bei der die Zwischenlage (13) die Nutwand (7) überdeckt.

8. Anordnung nach Anspruch 6 oder 7, bei der die Trennschicht (8) auf der Zwischenlage (13) befestigt ist.

9. Anordnung nach einem der vorhergehenden Ansprüche, bei der jedes Wicklungselement (2) von einer Trennschicht (8) umhüllt ist.

10. Anordnung nach Anspruch 9, bei der jede Trennschicht (8) ein vielfach um ein Wicklungselement (2) gewickeltes Band ist.

11. Anordnung nach Anspruch 10, bei der zur Bildung der Brücken (9) ein Band (12) aus einer elektrisch schwachleitfähigen Textilie mit der Trennschicht (8), abwechselnd darüber und darunter, auf das Wicklungselement (2) aufgebracht ist.

12. Anordnung nach einem der Ansprüche 9 bis 12, bei der an jedem Wicklungselement (2) die Trennschicht (8) von einer Zwischenlage (13) aus einer elektrisch schwachleitfähigen Textilie umhüllt ist.

13. Anordnung nach Anspruch 12, bei der die Zwischenlage (13) ein auf die Trennschicht (8) gewickeltes Band aus einer elektrisch schwachleitfähigen Textilie ist.

14. Mit einem Füllstoff, insbesondere mit einem ausgehärteten Epoxidharz, imprägnierte Anordnung nach einem der vorhergehenden Ansprüche, bei der jede Nut (3) mindestens eine, im wesentlichen parallel zu einer Nutwand (7) liegende, elektrisch abgeschirmte Trennschicht (8) aufweist, deren Festigkeit kleiner ist als diejenige anderer Schichten in der Nut (3).

15. Verwendung einer Anordnung nach einem der vorhergehenden Ansprüche, die mit einem Füllstoff, insbesondere einem ausgehärteten Epoxidharz, imprägniert ist, als Teil einer dynamoelektrischen Großmaschine, insbesondere als Stator.

## Claims

1. Arrangement comprising a ferromagnetic and electrically conductive carrier body (1) and winding elements (2) which are disposed in associated grooves (3) of the carrier body (1), in which arrangement
a) each winding element (2) has an electrically highly conductive base body (4) which is surrounded by an impregnatable insulating sleeve (5) enveloped by an electrically weakly conductive, impregnatable protective layer (6);
b) an impregnatable separating layer (8) is disposed between each winding element (2) and at least one groove wall (7) of each associated groove (3);
c) the protective layer (6) is electrically connected to the groove wall (7) through the separating layer (8) by way of a plurality of bridges (9);
characterized in that
d) the separating layer (8) is essentially formed from laminated mica sheets (10) which lie flat between the winding rod (2) and the groove wall (7);
e) the bridges (9) are electrically weakly conductive.

2. Arrangement according to claim 1, wherein the laminated mica sheets (10) are retained on or in an impregnatable carrier (11).

3. Arrangement according to claim 2, wherein the carrier (11) is an electrically weakly conductive textile.

4. Arrangement according to one of the preceding claims, wherein the bridges (9) are made of an electrically weakly conductive textile.

5. Arrangement according to claim 4, wherein the bridges (9) are formed with at least one tape (12) of an electrically weakly conductive textile, the said tape (12) being passed several times through the separating layer (8) and being electrically connected both to the protective layer (6) and to the groove wall (7).

6. Arrangement according to one of the preceding claims, wherein an intermediate layer (13) of an electrically weakly conductive textile is disposed between the separating layer (8) and the groove wall (7).

7. Arrangement according to claim 6, wherein the intermediate layer (13) covers the groove wall (7).

8. Arrangement according to claim 6 or 7, wherein the separating layer (8) is secured on the intermediate layer (13).

9. Arrangement according to one of the preceding claims, wherein each winding element (2) is enveloped by a separating layer (8).

10. Arrangement according to claim 9, wherein each separating layer (8) is a tape wound several times around a winding element (2).

11. Arrangement according to claim 10, wherein a tape (12) of an electrically weakly conductive textile is applied onto the winding element (2) with the separating layer (8), alternatingly over and under, in order to form the bridges (9).

12. Arrangement according to one of claims 9 to 12, wherein on each winding element (2) the separating layer (8) is enveloped by an intermediate layer (13) of an electrically weakly conductive textile.

13. Arrangement according to claim 12, wherein the intermediate layer (13) is a tape of an electrically weakly conductive textile which is wound onto the separating layer (8).

14. Arrangement according to one of the preceding claims which is impregnated with a filler, particularly a cured epoxy resin, wherein each groove (3) has at least one electrically shielded separating layer (8) disposed substantially parallel to a groove wall (7), the strength of the said separating layer being less than that of the other layers in the groove (3).

15. Use of an arrangement according to one of the preceding claims, which is impregnated with a filler, particularly a cured epoxy resin, as part of a heavy-duty dynamo-electric machine, particularly as stator.

## Revendications

1. Dispositif formé par un support (1) ferromagnétique conducteur électrique et des éléments d'enroulement (2) qui sont insérés dans des gorges (3) appropriées du support (1), dispositif dans lequel
a) chaque élément d'enroulement (2) comprend un corps de base (4) à bonne conductibilité électrique, entouré par une gaine isolante (5) imprégnable qui est enveloppée d'une couche protectrice (6) imprégnable à faible conductibilité électrique;
b) entre chaque élément d'enroulement (2) et au moins une paroi (7) de chaque gorge (3) correspondante est située une couche de séparation (8) imprégnable;
c) la couche protectrice (6) est reliée électriquement à la paroi (7) de la gorge à travers la couche de séparation (8) par l'intermédiaire de plusieurs ponts (9) ;
caractérisé en ce que
d) la couche de séparation (8) est formée, essentiellement, de feuilles de mica clivé (10) qui sont disposées à plat entre le barreau d'enroulement (2) et la paroi (7) de la gorge;
e) les ponts (9) ont une faible conductibilité électrique.

2. Dispositif selon la revendication 1, dans lequel les feuilles de mica clivé (10) sont maintenues sur ou dans un support imprégnable (11).

3. Dispositif selon la revendication 2, dans lequel le support (11) est constitué par une matière textile à faible conductibilité électrique.

4. Dispositif selon l'une des revendications précédentes, dans lequel les ponts (9) sont formés par une matière textile à faible conductibilité électrique.

5. Dispositif selon la revendication 4, dans lequel les ponts (9) sont formés par au moins une bande (12) faite d'une matière textile à faible conductibilité électrique, laquelle bande (12) traverse plusieurs fois la couche de séparation (8) et est reliée électriquement aussi bien à la couche protectrice (6) qu'à la paroi (7) de la gorge.

6. Dispositif selon l'une des revendications précédentes, dans lequel une couche intermédiaire (13) faite d'une matière textile à faible conductibilité électrique est située entre la couche de séparation (8) et la paroi (7) de la gorge.

7. Dispositif selon la revendication 6, dans lequel la couche intermédiaire (13) couvre la paroi (7) de la gorge.

8. Dispositif selon la revendication 6 ou 7, dans lequel la couche de séparation (8) est fixée sur la couche intermédiaire (13).

9. Dispositif selon l'une des revendications précédentes, dans lequel chaque élément d'enroulement (2) est enveloppé par une couche de séparation (8).

10. Dispositif selon la revendication 9, dans lequel chaque couche de séparation (8) est une bande enroulée plusieurs fois autour d'un élément d'enroulement (2).

11. Dispositif selon la revendication 10, dans lequel, pour former les ponts (9), une bande (12) faite d'une matière textile à faible conductibilité électrique, passant alternativement sur la couche de séparation (8) et en-dessous, est appliquée sur l'élément d'enroulement (2) en même temps que la couche de séparation (8).

12. Dispositif selon l'une des revendications 9 à 12, dans lequel, sur chaque élément d'enroulement (2), la couche de séparation (8) est enveloppée par une couche intermédiaire (13) faite d'une matière textile à faible conductibilité électrique.

13. Dispositif selon la revendication 12, dans lequel la couche intermédiaire (13) est une bande faite d'une matière textile à faible conductibilité électrique enroulée sur la couche de séparation (8).

14. Dispositif selon l'une des revendications précédentes, imprégné d'une matière de charge, notamment d'une résine époxy durcie, dans lequel chaque gorge (3) présente au moins une couche de séparation (8) électriquement écrannée qui est sensiblement parallèle à une paroi (7) de la gorge et dont la stabilité est inférieure à celle des autres couches dans la gorge (3).

15. Utilisation d'un dispositif selon l'une des revendications précédentes, qui est imprégné d'une matière de charge, notamment d'une résine époxy durcie, comme pièce d'une grosse machine dynamoélectrique, notamment comme stator.
